# EUROPEAN PATENT APPLICATION

(11) **EP 4 442 346 A1**
(43) Date of publication of application: **09.10.2024**
(21) Application number: 24168052.9
(22) Date of filing: 02.04.2024
(51) Int. Cl.: B01D 39/08, B01D 39/16

(54) **NEEDLE-PUNCHED FILTRATION COMPOSITE AND METHOD OF MAKING SAME**

(30) Priority: 02.04.2023 IN 202321000205
(71) Applicant: Welspun Living Limited, Mumbai Maharashtra 400013 (IN)
(72) Inventor: Goenka, Dipali, 400013 Mumbai (IN); Basu, Basudev, 400013 Mumbai (IN)
(74) Representative: Basck Limited

(57) **Abstract**

The present disclosure describes a needle-punched filtration composite (10). The needle-punched filtration composite (10) includes non-woven layers (20, 40) having a blend of acrylic staple fibers and a high temperature resistant synthetic staple fibers with glass fabric layer (30). The top non-woven layer, (20) the glass fabric layer (30) and bottom non-woven layer (40) are needle-punched together to make a single non-woven fabric. This fabric is passed through mechanical and chemical finishes. It is stable up to a high temperature range of 250 ⁰C to 350 ⁰C. The fabric is resistant to acid and alkali. The fabric is also made oil and water repellent by chemical finishing treatment. The developed fabric is used for air and gas filtration applications.

## Description

### TECHNICAL FIELD

The present disclosure relates to a needle-punched filtration composite. and a method of (namely a method for) making such a needle-punched filtration composite.

### BACKGROUND

Industrial filtration products must operate in harsh conditions. Elevated temperatures, moisture and acidic conditions are common. The industrial filtration products include fibers. Balancing fiber selection, composite structure, process parameters, and filter design with desired end use properties and cost considerations is difficult and not always predictable. Typical high strength and high temperature resistant structures are potentially expensive, precluding their use. Less costly fibers may meet the exacting conditions that industrial filtration applications require.

### SUMMARY

The present disclosure relates to a needle-punched filtration composite and a method of (namely, a method for) making such a needle-punched filtration composite. The needle-punched filtration composite includes a first non-woven layer, a glass fabric layer, and a second non-woven layer. The first non-woven layer, the glass fabric layer 30, and the second non-woven layer are needle-punched together to form the needle-punched filtration composite. While three layers are shown, it is possible that other layers may be included or that each layer may itself comprise multiple layers when specified as such. The selection of fiber components in each layer result in a high temperature resistant composite suitable for industrial filtration applications. Furthermore, the resultant construction offers better hydrolysis resistance compared to conventional 100% polyester with polyester multi-filament products. The needle-punched filtration composite, prior to conversion into a filter article, has a planar configuration for packaging in a roll good form, similar to textile roll goods.

### BRIEF DESCRIPTION OF THE DRAWINGS

The foregoing summary, as well as the following detailed description of illustrative embodiments of the present application, will be better understood when read in conjunction with the appended drawings. For purposes of illustrating the present application, the drawings show exemplary embodiments of the present disclosure. It should be understood, however, that the present disclosure is not limited to the precise arrangements and instrumentalities shown in the drawings. In the drawings:
Figure 1 is a schematic of a needle-punched filtration composite according to an embodiment of the present disclosure;
Figure 2 is a cross-sectional view of a needle-punched filtration composite taken along line 2-2 in Figure l; and
Figure 3 is a process flow diagram for a method of making a needle-punched filtration composite according to an embodiment of the present disclosure.

### DETAILED DESCRIPTION OF ILLUSTRATIVE EMBODIMENTS

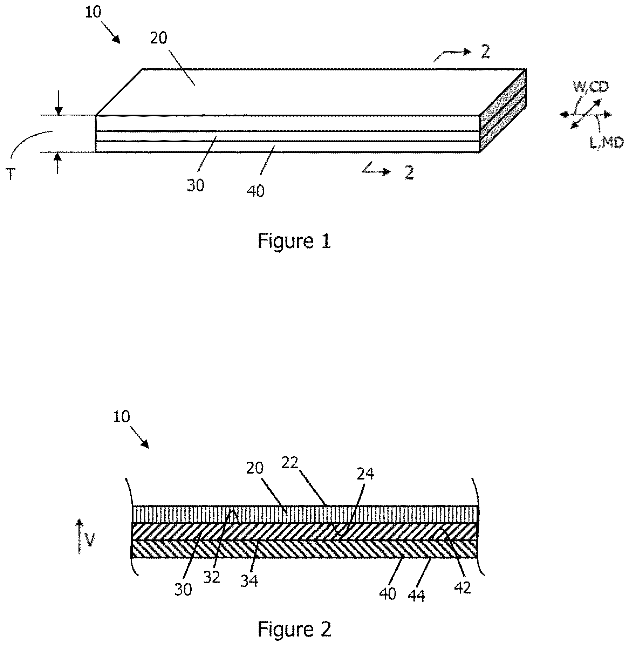

Referring to Figure 1, an embodiment of the present disclosure includes a needle-punched filtration composite **10** having a plurality of textile and/or non-woven layers with fibers selected for use in exacting conditions, such as high temperature, high moisture, and even highly acidic or alkali conditions. In accordance with the illustrated embodiment, the needle-punched filtration composite **10** includes a first non-woven layer **20,** a glass fabric layer **30,** and a second non-woven layer **40.** The first non-woven layer **20,** the glass fabric layer **30,** and the second non-woven layer **40** are needle-punched together to form the needle-punched filtration composite **10.** While three layers are shown, it is possible that other layers maybe include or that each layer may itself comprise multiple layers when specified as such.

The selection of fiber components in each layer results in a high temperature resistant composite suitable for industrial filtration applications. Furthermore, the resultant construction offers better hydrolysis resistance compared to conventional 100% polyester with polyester multi-filament products. More specifically, the inventors have found the construction particularly suitable for so-called mid-range temperature application, e.g. between 140 to 190 degrees Celsius, under high moisture conditions, such as above 70% to 80% relative humidity. The composite **10** is subjected to withstand high temperature, high humidity, and high moisture condition. For example, the composite **10** is subj ected to withstand high moisture conditions above 70% for a specified period of time per the ASHRAE American Society of Heating, Refrigerating and Air-Conditioning Engineers) standard. This configuration allows the composite **10** to be resistant to hydrolysis. The needle-punched filtration composite, prior to conversion into a filter article, has a planar configuration for packaging in a roll good form, similar to textile roll goods. The needle-punched filtration composite may be wound, slit, and/or formed into desired shapes for assembly into a filter article.

### Non-woven Layers

Continuing with Figures 1 to 3, the first non-woven layer **20** has a first side **22** (also a face **22**) and a second side **24** (or back **24**) opposed to the first side **22** along a vertical direction V. The woven glass fabric layer **30** also has a first side **32** (also a face **82**) and a second side **84** (or back **84**) opposed to the first side **82** along the vertical direction V. The second non-woven layer **40** is disposed adjacent to the glass fabric layer **30** along the vertical direction V. The needle-punched filtration composite **10** has a thickness T that extends from the first side **22** to the second side **44** along the vertical direction V. The first non-woven layer **20,** woven glass fabric layer **30,** and second non-woven layer **40** are substantially coplanar with respect to each other. Specifically, the needle-punched filtration composite **10** may be an elongate material having a length L (see Figure 1) that extends along a machine direction and a width W along a cross direction CD that is perpendicular to the machine direction MD. The cross-direction CD and machine direction MD are perpendicular to each other (as shown in Figure 1) and have the meaning one of skill in the art would ascribe to those terms.

Continuing with Figures 1to 3, the first non-woven layer **20** and the second non-woven layer **40** each are formed from staple fibers. More specifically, the first non-woven layer **20** and the second non-woven layer **40** may be any dry laid fibrous assembly of staple fibers. Details concerning how the non-woven layer is formed are further discussed below. In accordance with one embodiment of the present disclosure, the non-woven layers may each have basis weight in the range of about 200 grams per square metre to about 400 grams per square metre. The non-woven layers may have a composite weight in the range of 100 to 1000 grams per square metre.

In an embodiment, the staple fibers in each layer **20** and **40** have a denier between about 1.0 to about 20.0. Other parameters of the staple fibers may be selected to aid in processing and/or filtration efficiency. In one example, the staple length of the fibers, whether in the first non-woven layer **20** and/or second non-woven layer **40,** can be about 5 mm to about 50 mm. The fiber diameter can range from about 0.1 microns to about 30 microns or higher.

The staple fibers forming for first and second non-woven layers **20, 40** are typically a blend of acrylic fibers and high temperature resistant synthetic fibers. For example, the staple fibers may be blend of acrylic fibers and either one of polyethylene terephthalate (PET) fibers, b) polyamide (PA6 and/or PA6,6.) fibers, polyethylene (PE) fibers, and/or polylactic acid (PLA) fibers, and/or copolymer of polymer fibers. In one particular suitable example, the first non-woven layer **20** and the second non-woven layer **40** comprise a blend of acrylic fibers and a high temperature resistant fiber, such as PET fibers. In such an example, the acrylic fibers may comprise between about 5% and 95% by weight of the first non-woven fabric layer **20.** Likewise, the PET fibers may inversely comprise about 95% and 5% by weight of the first non-woven fabric layer **20.** Furthermore, the acrylic fibers may comprise about 5% and 95% by weight of the second non-woven fabric layer **40.** Likewise, the PET may inversely comprise about 95% and 5% by weight of the second non-woven fabric layer **40.**

The fibers can include homogeneous staple fibers, bicomponent fibers, or multi-competent fibers. Multi-component and/or bi-component fibers have sheath-core configuration, islands-in-the-sea configuration, and/or segmented-pie configuration. Furthermore, the cross-sectional shape of the fibers can be varied and include a circular, trilobal, pentalobal, or multi-lobed shaped. While synthetic polymers are possible other fibers types may be used. Furthermore, different fibers blends may be selected for the first non-woven layer **20** and/or second non-woven layer **40** of fibers.

### Glass Fabric Layer

The felted composite **10** includes the glass fabric layer **30** disposed between the first non-woven layer **20** and the second non-woven layer **40.** The glass fabric layer is substantially or entirely formed using glass fibers and/or yarns. In one useful example, the glass fabric layer **30** is a woven glass fabric that includes warp yarns and weft yarns interlaced with the warp yarns to form a woven design repeat. As used herein, a woven design repeat includes at least a first warp yarn, a second warp yarn, and at least one weft yarn. For example, a plain weave fabric has a woven design repeat that includes two adjacent warp yarns and two adjacent weft yarns. Depending on the particular design, woven design repeats may repeat along: a) the warp direction; b) the weft direction 6; or both the warp direction and weft direction. However, the design of the woven fabric is not limited to a plain weave. For example, the woven fabric may have a number of exemplary woven structures, including but not limited to: plain weaves; basket weaves, rib weaves (e.g. 2x1 rib weave; m2x2 rib weave; or 3x1 rib weave) twill weaves; oxford weaves; percale weaves, satin weaves (e.g., satin dobby base, satin stripe satin 5/1, satin 4/1; 4/1 satin base strip; 4/1 satin swiss dot; 4/1 down jacquard; 5/1 satins), sateen weaves, or percale weaves.

Furthermore, so-called "co-insertion" techniques may be used to insert multiple weft yarns along a weft insertion path in a single weft insertion even during weaving. "Co-insertion" is where multiple picks or weft yarns are inserted into the warp shed at one time during weaving. In co-insertion, two pick yarns supplied from two different yarn packages are inserted at one time through the shed during weaving. The weft insertion path extends along the weft direction around the warp yarns across an entirety of the width of the woven fabric. As illustrated, the weft insertion path extends under (with respect to the sheet) warp, over warp yarn, and so on. A person of skill in the art will appreciate that the weft insertion path **19** varies from one woven design to another woven design.

The warp yarns and weft yarns are arranged to achieve desired warp and weft end densities, respectively. In accordance with an embodiment of the present disclosure, the warp end density of the glass fabric layer **30** and the weft end density of the weft yarns vary.

The yarns (warp or well) can have a range of counts for the different fibers and woven constructions as described herein. The yarn count in glass fabric layer, for either warp or weft yarns, can range between about 8 Ne (664 denier) to about 120 Ne (44.3 denier).

Continuing with Figures 1 and 2, the first layer **20,** the glass fabric layer **30,** and The second layer **40** are integrated together via needle-punching. As shown, the staple fibers in the first layer **20** are entangled and knotted with staple fibers in the second layer **40** using the techniques described herein. Advantageously, the needle-punched filtration composite **10** is constructed such that fibers of the first layer **20** are substantially integrated with the fibers of the second layer **40** and fibers of the glass fabric layer **30.** In one example, the layers **20, 30, 40** are integrated in such a manner that if one attempted to delaminate the layers of fibers, the structural integrity of each individual fiber layer **20, 30,** and **40** would be destroyed. Accordingly, the first layer **20,** glass fabric layer **30,** and second layer **40** are not merely laying adjacent to each other. Rather, the first layer **20,** glass fabric layer **30,** and second layer **40** define a monolithic composite web. The needle-punched filtration composite may optionally employ a bonding material that at least partially bonds the layers together as needed. In one example, the bonding material may be chemical bonding or low-melt polymer fibers melted during processing to impart stiffness.

The needle-punched filtration composite **10** thus include acrylic fibers, high temperature resistant synthetic fibers, and glass fibers. The composition of the acrylic fibers, high temperature resistant synthetic fibers, and glass fibers may vary as the weight of the first layer **20,** the glass fabric layer **30,** and the second layer **40** vary.

### Physical Properties

The needle-punched filtration composite **10** further includes the non-woven layers **20** and **40** that are needle-punched together with the glass fabric layer **30.** The process to make the composite fabric **10** is such that non-woven fibers in each layer **20** and **40** are substantially entangled with each other and with glass fabric layer. The resulting structure defines pores having a diameter that is suitable for industrial filtration applications, such as air filtration, gas filtration, dust collection. Pore size as used herein is measured according to ASTM D 6767, using the edition available as of the filing of the present application. As explained below, the pore dimensions are a result of non-woven layers becoming entangled together with the glass fabric layer during the needle-punching process. In accordance with the present embodiment, the pores have diameters up to about 2 to 90 microns. In certain embodiments, however, the pores may have a diameter that may be higher than 90 microns.

The needle-punched filtration composite **10** has a range of basis weights. For instance, the glass fabric layer has a basis weight in the range of about 300 grams per square metre to about 700 grams per square metre. In one embodiment, the basis weight of the glass fabric layer is in the range of about 350 grams per square metre to about 650 grams per square metre. In another embodiment, the basis weight of the base wove fabric is in the range of about 400 grams per square metre to about 600 grams per square metre. The basis weight of the filtration composite **10** may fall outside the ranges stated in this paragraph as well. The basis weight referred to herein can be determined according to ISO 9073-1: 1989, Textiles --Test methods for nonwovens -- Part 1: Determination of mass per unit area."

The needle-punched filtration composite **10** may process to have a desired thickness T. In accordance with an embodiment, the thickness T of needle-punched filtration composite **10** may range between about 1.5 mm and about 2.0 mm measured according to NWSP 120.6 (15) and ISO 90732 standards.

The needle-punched filtration composite **10** may process to have an acid and/or alkali resistance. In accordance with an embodiment, the alkali resistance of needle-punched filtration composite **10** may range be at least alkali resistance of at least 4.5 measured according to standard test method AATCC 6.

The needle-punched filtration composite **10** have a desired resistance of shrinkage. In accordance with an embodiment, the needle-punched filtration composite **10** has a shrinkage less than about 0.8% in the machine direction and less than about 0.5% in the cross-machine direction measured according to standard test method ASTM D7983/17.

The needle-punched filtration composite **10** is prepared to have a desired water repellency. In one embodiment, the needle-punched filtration composite **10** has a water repellency of at least about 90% measured according to according to AATCC 22-2005 and ISO 5.

The needle-punched filtration composite **10** may be oil repellent. In accordance with an embodiment, the needle-punched filtration composite has an oil repellency of at least about 60% to 70% measured according to standard test method AATCC 118.

### Method of Manufacture

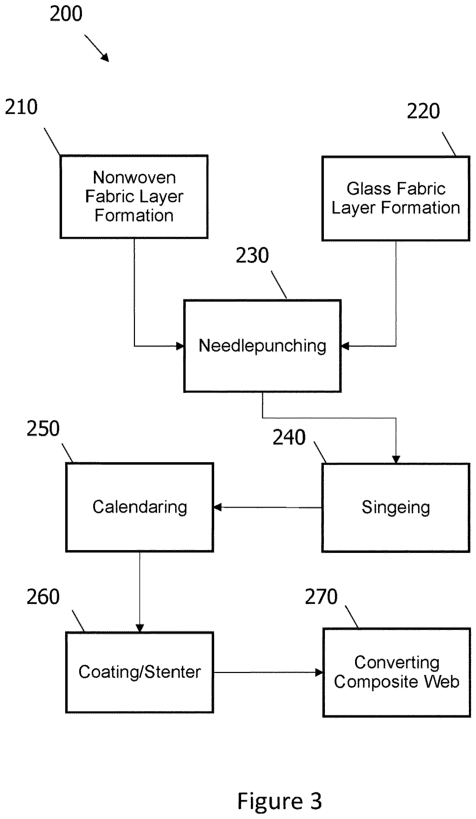

Turning now to Figure 3, a process **200** for manufacturing the needle-punched filtration composite **10** is illustrated. In general, the process **200** includes use of a non-woven fabric layer formation **210,** glass fabric needle punching **230,** singing **240,** calendaring **250,** coating **260,** and converting **270.** In a step **210,** the first and second non-woven layers **20** and **40** are formed using non-woven processing techniques with the specific selective fiber compositions. Separately, in a step **220,** the glass fabric is formed, either by weaving, knitting, etc. In a step **230,** the first non-woven layer **20,** the glass fabric layer **30,** and second non-woven layer **40** are consolidated together in a needle-punching unit for needle-punching **230** along with scrim insertion. The composite **10** is then passed for mechanical and chemical finishings.

After needle-punching **230,** the needle-punched filtration composite **10** undergoes singing whereby one surface of the composite **10** is exposed to a singing device, which, in turns, creates a harsher surface to increase dust and particle holding capacity. After singing **240,** the needle-punched filtration composite **10** is optionally subjected to calendaring step **250,** which helps control fabric thickness and shrinkage resistance. Calendaring at a temperature greater than 200°C removes residual shrinkage in the fabric. The process **200** includes an optional coating step **260,** whereby the composite **10** is passed through a coating/stenter machine and commercially available water and/or oil repellent finishes are applied thereto. The coating step may apply a pad-dry-cure process.

The needle-punched filtration composite **10** has unique properties suitable industrial filtration applications, as discussed above. The fabrics made in accordance with the present disclosure may provide enhanced filtration efficiency, alkali resistance, oil repellency, water resistance, while also being resistant to thermal degradation at temperatures between 250 and 350 degrees Celsius. Typical filtration products are comprise solely of PET or aramid fibers. PET fibers are not proven durable or useful in certain filtration applications. Aramid based solutions are too expensive for the market. The needle-punched filtration composite **10** of the present disclosure is a synergistic result of non-woven layers and glass fabric construction and with needle-punching.

It will be appreciated by those skilled in the art that various modifications and alterations of the present disclosure can be made without departing from the broad scope of the appended claims. Some of these have been discussed above and others will be apparent to those skilled in the art. The scope of the present disclosure is limited only by the claims.

## Claims

1. A needle-punched filtration composite (10), **characterized in that** the needle-punched filtration composite (10) comprises:
a first non-woven layer (20) having a blend of acrylic staple fibers and a high temperature resistant synthetic staple fibers;
a glass fabric layer (30) adjacent to the first non-woven layer (20); and
a second non-woven layer (40) opposite in the first non-woven layer (20) adjacent to the glass fabric layer (30), the second non-woven layer (40) having a blend of acrylic staple fibers and high temperature resistant synthetic staple fiber,
wherein the first non-woven layer (20), the glass fabric layer (30) and the second non-woven layer (40) are needle-punched together such that the acrylic staple fibers and the high temperature resistant synthetic staple fibers of the first non-woven layer (20) are needle-punched together with the glass fabric layer (30) and the acrylic staple fibers and the high temperature resistant synthetic staple fiber of the second non-woven layer (40).

2. A needle-punched filtration composite (10) of claim 1, having a basis weight between about 300 grams per square metre and 700 grams per square metre measured according to standard test method NWSP 130.1 (15) and ISO 90731.

3. A needle-punched filtration composite (10) of claim 1 or 2, having a thickness about 1.5 mm and about 2.5 mm measured according to standard test method NWSP 120.6 (15) and ISO 90732.

4. A needle-punched filtration composite (10) of any one of the claims 1 to 3, having an alkali resistance of at least 5 measured according to standard test method AATCC 6.

5. A needle-punched filtration composite (10) of any one of claims 1 to 4, having a shrinkage less than about 0.8% in the machine direction and 0.5% in the cross-machine direction.

6. A needle-punched filtration composite (10) of any one of the claims 1 to 5, having a water repellency of at least about 90% measured according to AATCC 22-2005 and ISO 5.

7. A needle-punched filtration composite (10) of any one of the claims 1 to 6, having an oil repellency of at least about 60% to 70% measured according to standard test method AATCC 118.

8. A needle-punched filtration composite (10) of any one of the claims 1 to 7, having a coating composition applied that includes oil and water repellent chemicals.

9. A needle-punched filtration composite (10) of any one of the claims 1 to 8, wherein one of the first non-woven layer (20) or the second non-woven layer (40) is singed giving rise to a harsher surface on one of the first non-woven layer (20) or the second non-woven layer (40).

10. A needle-punched filtration composite (10) of any one of the claims 1 to 9, having a temperature resistance of at least 150 degrees Celsius.

11. A needle-punched filtration composite (10) of any one of the claims 1 to 10, wherein the first non-woven layer (20) comprises between 95% and 5% by weight acrylic staple fibers and inversely between 5% and 95% by weight of the high temperature resistant synthetic staple fibers.

12. The needle-punched filtration composite (10) of any one of the claims 1 to 11, wherein the second non-woven layer comprises (40) between 95% and 5% by weight acrylic staple fibers and between 5% and 95% by weight of the high temperature resistant synthetic staple fibers.

13. The needle-punched filtration composite (10) of any one of the claims 1 to 12, wherein the glass fabric layer (30) is a woven glass fabric.

14. The needle-punched filtration composite (10) of any one of the claims 1 to 13, wherein either or both of the first non-woven layer (20) or the second non-woven layer (40) are dry laid non-woven layers.

15. The needle-punched filtration composite (10) of any one of the claims 1 to 14, wherein the acrylic staple fibers of the first non-woven layer (20) have a denier between 8.0 Ne and 120.0 Ne,
wherein the high temperature resistant synthetic staple fibers of the first non-woven layer (20) have a denier between 8.0 Ne and 120.0 Ne,
wherein the yarns in the glass fabric layer (30) have a denier between denier between 8.0 Ne and 120.0 Ne.

16. The needle-punched filtration composite (10) of any one of the claims 1 to 15, wherein the acrylic staple fibers of the second non-woven layer (40) have a denier between 8.0 Ne and 120.0 Ne, and
wherein the high temperature resistant synthetic staple fibers of the second non-woven layer (40) have a denier between 8.0 Ne and 120.0 Ne.
